# FASCICULE DE BREVET EUROPEEN

(11) **EP 1 483 344 B1**
(45) Date de publication et mention de la délivrance du brevet: **06.08.2008**
(21) Numéro de dépôt: 03725287.1
(22) Date de dépôt: 13.03.2003
(51) Int. Cl.: C09D 7/12, C09J 153/00, C09D 153/00

(54) **UTILISATION DE COPOLYMERES A BLOCS PORTANT DES FONCTIONS PHOSPHATES ET/OU PHOSPHONATES COMME PROMOTEURS D ADHESION OU COMME AGENTS DE PROTECTION CONTRE LA CORROSION D UNE SURFACE METALLIQUE**
VERWENDUNG VON BLOCKCOPOLYMEREN MIT PHOSPHAT- UND/ODER PHOSPHONATGRUPPEN ALS HAFTVERMITTLER ODER ALS KORROSIONSSCHUTZMITTEL FÜR EINE METALLOBERFLÄCHE
USE OF BLOCK COPOLYMERS BEARING PHOSPHATE AND/OR PHOSPHONATE FUNCTIONS AS ADHESION PROMOTERS OR AS PROTECTING AGENTS AGAINST THE CORROSION OF A METALLIC SURFACE

(30) Priorité: 13.03.2002 FR 0203110
(43) Date de publication de la demande: 08.12.2004
(73) Titulaire: RHODIA CHIMIE, 92512 Boulogne Billancourt Cedex (FR)
(72) Inventeur: DESTARAC, Mathias, F-75005 PARIS (FR); BONNET-GONNET, Cécile, F-75004 PARIS (FR); CADIX, Arnaud, F-75017 PARIS (FR)
(74) Mandataire: Delenne, Marc
(86) Numéro de dépôt international: PCT/FR2003/000803
(87) Numéro de publication internationale: WO 2003/076531

(56) Documents cités:
- EP-A- 1 156 089
- DE-A- 10 029 694
- US-B1- 6 174 953

## Description

La présente invention concerne l'utilisation d'un copolymère à blocs dont au moins un bloc comprend des fonctions phosphates et/ou phosphonates, à titre d'additif pour des compositions filmogènes, notamment de type peinture, latex, ou mastic éventuellement siliconé pour assurer ou promouvoir l'adhésion de ces compositions sur une surface métallique, ou pour protéger ladite surface métallique contre la corrosion.

Par surface métallique au sens de l'invention, on entend les surfaces de matériaux à base de métaux ou de semi-métaux.

Par métaux, on entend dans la présente invention, toute substance qui se distingue des substances non métalliques par une forte conductivité pour l'électricité et la chaleur, cette conductivité décroissant avec une élévation de température, et par leur forte réflectivité vis à vis de la lumière qui leur donne un éclat métallique caractéristique.

On peut citer à titre d'exemple de métaux ou de semi-métaux les éléments de la classification périodique des éléments listé dans le tableau de la page 227 du document intitulé « Encyclopaedia Britannica », volume 15, 1966 incorporé par référence.

On peut citer notamment les éléments de la classification périodique des éléments choisis dans le groupe des alcalins ou alcalino-terreux, des métaux de transition, de l'Aluminium, du Gallium, de l'Indium, du Talium, du Silicium, du Germanium, de l'Etain, du Plomb, de l'Arsenic, de l'Antimoine, du Bismuth, du Tellure, du Polonium ou de l'Astate, ainsi que leurs oxydes ou leurs alliages.

On peut citer à titre de liste préférée de matériaux métalliques l'aluminium, le duralumin, le zinc, l'étain, le cuivre, les alliages du cuivre tels que le bronze ou le laiton, le fer, l'acier éventuellement inoxydable ou galvanisé, l'argent, ou le vermeil.

Lorsqu'on applique directement sur la surface d'un de ces matériaux métalliques une composition filmogène de type peinture ou mastic siliconé ou non, on observe d'une manière générale, un mauvais ancrage de la composition filmogène sur la surface métallique, ce qui conduit à l'obtention d'un revêtement de qualité médiocre.

Par ailleurs on peut également observer, dans le cas de matériaux contenant du fer tel que l'acier, une corrosion éclair provoquée par l'application directe sur la surface métallique d'une composition filmogène de type peinture ou mastic siliconé ou non, en particulier lorsqu'il s'agit d'une composition aqueuse, qui altère considérablement la qualité et la durabilité de ces revêtements.

En outre, dans le cas de matériaux en aluminium, se présente un problème supplémentaire, qui est la très faible mouillabilité de la surface aluminium qui rend impossible l'application directe d'une composition filmogène de type peinture ou mastic siliconé ou non sur la surface d'un matériau en aluminium, ou bien conduit, dans le meilleur des cas, à l'obtention d'un revêtement de qualité médiocre.

Le document EP 1156089 décrit l'utilisation de certains copolymères à blocs comprenant des fonctions phosphates dans des compositions filmogènes comprenant des copeaux métalliques dispersés à l'intérieur. Ces compositions ne sont pas appliquées sur des surfaces métalliques.

De plus, les propriétés d'adhésion des revêtements ainsi obtenus se déradent en présence d'humidité ou de contact avec l'eau de ces surfaces, notamment en raison de phénomènes de diffusion de l'eau à l'interface.

Le besoin existait d'améliorer les propriétés d'adhésion sur les surfaces métalliques.

Or, la Demanderesse a découvert que certains copolymères à blocs dont au moins un bloc comprend des fonctions phosphates et/ou phosphonates peuvent être utilisés à titre d'additifs au sein d'une composition filmogène pour assurer ou promouvoir l'adhésion de ces compositions sur des surfaces métalliques.

Les modifications de propriétés d'adhésion des compositions filmogènes induites par la présence de ces copolymères à blocs permettent de palier aux problèmes rencontrés jusque là, et il est possible d'obtenir une amélioration de l'efficacité de l'application d'une composition filmogène de type peinture ou mastic, mais également une amélioration de l'adhésion sur le support de cette composition filmogène effective et durable, même en présence d'eau.

Cette amélioration de l'adhésion du revêtement se traduit par un effet décoratif, protecteur ou fonctionnel prolongé, avantageusement pendant toute la durée de vie du produit, sans que l'effet induit par le revêtement réalisé ne soit susceptible d'être remis en cause par un lavage avec une solution aqueuse (S) de pH compris entre 1 et 12, comprenant éventuellement du chlorure de sodium, à raison d'une concentration maximale de 10M, un pelage
ou une désagrégation dudit revêtement, notamment sous l'effet de contraintes mécaniques.

De façon plus générale, la présence de ces copolymères à blocs de l'invention au sein des compositions filmogènes procure à ces compositions une affinité telle vis à vis de la surface métallique que la solidarisation de ce dépôt sur la surface traitée reste assurée pour des humidités relatives allant de 0 à 100%. Avantageusement, cette solidarisation reste assurée en présence d'eau, voire en immersion dans l'eau.

De par la modification des propriétés de surface qu'ils induisent, et compte tenu de leur tenue à l'eau, les revêtements à base des compositions filmogènes comprenant les copolymères à blocs réalisés selon l'invention peuvent être mis en oeuvre dans de nombreux domaines d'application.

Ainsi, selon un premier aspect, la présente invention a pour objet l'utilisation d'un copolymère à blocs dont au moins un bloc comprend des fonctions phosphates et/ou phosphonates, ledit copolymère étant éventuellement mis en solution dans un solvant tel qu'un solvant organique, de l'eau ou un mélange eau-alcool, à titre d'additif au sein d'une composition filmogène, pour assurer ou promouvoir l'adhésion de ladite composition sur une surface métallique.

Selon un second aspect, la présente invention a pour objet l'utilisation d'un copolymère à blocs dont au moins un bloc comprend des fonctions phosphates et/ou des fonctions phosphonates, ledit copolymère étant éventuellement mis en solution dans un solvant tel qu'un solvant organique, de l'eau ou un mélange eau-alcool, à titre d'additif au sein d'une composition filmogène, pour protéger contre la corrosion une surface métallique, sur laquelle la composition filmogène est appliquée de manière à obtenir un revêtement.

L'application de cette composition filmogène selon l'invention sur la surface métallique peut être effectuée en appliquant, sur la surface métallique cette composition, ou bien en immergeant la surface à traiter dans la composition, puis en éliminant ensuite au moins partiellement, et de préférence pour l'essentiel, le solvant initialement contenu dans cette composition, par exemple par séchage.

Par élimination partielle, on entend une élimination d'au moins 70% en masse du solvant initialement présent, de préférence d'au moins 80% en masse, et encore plus avantageusement d'au moins 90% en masse.

Une élimination du solvant « pour l'essentiel » correspond quant à elle à une élimination d'au moins 95% en masse du solvant initialement présent, de préférence d'au moins 97% en masse, et encore plus avantageusement d'au moins 99% en masse.

La concentration en copolymère à blocs dans la composition filmogène est comprise, dans le cas le plus général, entre 0,001 et 20% en masse par rapport à la masse totale de l'extrait sec de ladite composition.

De façon à obtenir un mouillage optimal du support et à éviter l'apparition d'hétérogénéités au sein du dépôt réalisé, on préfère utiliser une concentration de copolymère à bloc comprise entre 0,005 et 10% et de manière encore plus préférentielle comprise entre 0,01 et 5% en masse par rapport à la masse totale de l'extrait sec de ladite composition.

De telles teneurs confèrent à la composition aqueuse une viscosité adaptée à une application sur la surface métallique. De plus, ces teneurs mènent à l'obtention d'un film continu (sans apparition de zones de démouillage) lorsqu'on les applique à l'aide d'un tire film sur des surfaces planes, ou, de façon plus générale, lorsqu'on immerge la surface à traiter dans ladite solution.

En outre, ces concentrations sont particulièrement bien adaptées pour réaliser, par un simple séchage, une élimination partielle ou totale d'un solvant aqueux.

Le séchage est effectué par exemple à une température comprise entre 15°C et 50°C (de préférence entre 19 et 25°C), et dans des conditions d'humidité comprises entre 10% et 70%, et de préférence entre 50% et 60%.

Dans le cas où le dépôt de la composition filmogène sur la surface métallique est réalisé à l'aide d'un tire-film, le film obtenu possède une épaisseur comprise entre 50 microns et 1 mm, et de façon avantageuse entre 70 et 500 microns. Ainsi, l'épaisseur du film déposé peut de façon encore plus avantageuse être de l'ordre de 100 microns.

Après le séchage on obtient un dépôt de la composition filmogène d'épaisseur comprise entre 25 microns et 0,5mm, avantageusement entre 30 et 100 microns, et de préférence de l'ordre de 50 microns.

Par « composition filmogène », au sens de l'invention, on entend toute composition sous la forme d'une dispersion ou d'une solution, généralement sous la forme d'une dispersion où la phase dispersée présente avantageusement une taille comprise entre 10Å à 100µm, et comprenant :
- à titre de phase continue ou de solvant, un solvant organique ou de l'eau, éventuellement en association avec d'autres composés hydrosolubles tels que des alcools, et notamment l'éthanol ; et
- des composés de type polymères ou précurseur de polymères, de résine acrylique ou de silicones, qui sont susceptibles de conduire à la formation d'un film polymère, d'un film acrylique ou d'un film silicone suite à l'application de la composition sur une surface et à l'évaporation au moins partielle du solvant, c'est à dire du solvant organique ou de l'eau, et éventuellement des autres composés hydrosolubles tels que de l'éthanol.

Ainsi, de façon non limitative, les compositions filmogènes de l'invention peuvent par exemple être des compositions comprenant une dispersion aqueuse ou hydro-alcoolique de polymères carbonés sous la forme d'un latex où d'une formulation, de type adhésif, mastic ou peinture par exemple, comprenant un tel latex, ou de précurseurs de silicones et notamment une composition de mastic du type de celles décrites dans le documents EP 665 862, WO 98/13410 ou WO 99/65973.

Les compositions filmogènes de l'invention peuvent également être des compositions comprenant une dispersion de polymères carbonés sous la forme d'un latex ou d'une formulation, de type adhésif, mastic ou peinture dans un solvant organique.

Lors de l'application des copolymères à blocs de l'invention sur une surface métallique, le ou les blocs d'ancrage fonctionnalisés par les fonctions phosphates et/ou phosphonates créent des liaisons chimiques avec les atomes de la surface métallique. Ces réactions chimiques ont lieu sur les sites susceptibles d'être corrodés et induisent de ce fait une protection de la surface métallique.

Les blocs distincts du bloc d'ancrage du copolymère à bloc permettent d'ajuster l'état de la surface métallique à l'application souhaitée, en particulier d'augmenter les interactions entre la composition (F) et la surface, donc l'énergie d'adhésion.

Ces blocs peuvent comprendre en outre une ou plusieurs fonctions chimiques susceptibles de créer des liens chimiques durables avec le polymère contenu dans la composition filmogène (F).

On peut citer à titre d'exemple de fonctions chimiques les fonctions hydroxy, epoxy, carboxy, amino ou isocyanates, qui sont susceptibles d'agir dans une étape de réticulation.

Les copolymères à blocs de la présente invention présentent au moins un bloc comprenant des fonctions phosphates et/ou phosphonates.

Ce bloc, appelé bloc d'ancrage, peut être un homopolymère à base de monomère comprenant des fonctions phosphates ou phosphonates.

Le bloc d'ancrage peut également être un polymère statistique à base d'un monomère comprenant l'une ou l'autre de ces fonctions phosphates ou phosphonates ou leurs mélanges dans une quantité comprise entre 0,1 et 100% en poids desdits monomères par rapport au poids total du bloc d'ancrage. De préférence cette quantité desdits monomères est comprise entre 0,5% et 50% en poids desdits monomères par rapport au poids total du bloc d'ancrage. De manière encore plus préférentielle, cette quantité est comprise entre 2% et 20% en poids desdits monomères par rapport au poids total du bloc d'ancrage.

Le monomère comprenant des phosphonates peut être choisi par exemple parmi :
- les dérivés N-methacrylamidomethylphosphonic acid esters, en particulier l'ester n-propylique (RN 31857-11-1), l'ester méthylique (RN 31857-12-2), l'ester éthylique (RN 31857-13-3), l'ester n-butylique (RN 31857-14-4), l'ester isopropylique (RN 51239-00-0), ainsi que leurs dérivés monoacide et diacide phosphonique, tel le N-methacrylamidomethylphosphonic diacid (RN 109421-20-7),
- les dérivés N-methacrylamidoethylphosphonic acid esters, tel le N-methacrylamidoethyl phosphonic acid dimethyl ester (RN 266356-40-5), le N-methacrylamidoethyl phosphonic acid di(2-butyl-3,3-dimethyl) ester (RN 266356-45-0), ainsi que leurs dérivés monoacide et diacide phosphonique, tel le N-methacrylamidoethylphosphonic diacid (RN 80730-17-2),
- les dérivés N-acrylamidomethylphosphonic acid esters tels le N-acrylamidomethyl phosphonic acid dimethyl ester (RN 24610-95-5), le N-acrylamidomethyl phosphonic acid diethyl ester (RN 24610-96-6), le bis(2-chloropropyl) N-acrylamidomethyl phosphonate (RN 50283-36-8), ainsi que leurs dérivés monoacide et diacide phosphonique tel le N-acrylamidomethyl phosphonic acid (RN 151752-38-4),
- les dérivés vinylbenzylphosphonate dialkyl ester, en particulier les dérivés di(n-propyl) (RN 60181-26-2), di(isopropyl) (RN 159358-34-6), diethyl (RN 726-61-4), dimethyl (RN 266356-24-5), di(2-butyl-3,3-dimethyl) (RN 266356-29-0) et di (t-butyl) ester (RN 159358-33-5), ainsi que leurs variantes monoacide et diacide phosphonique, tel le vinylbenzylphosphonic diacid (RN 53459-43-1),
- le diéthyl 2-(4-vinylphenyl)ethanephosphonate (RN 61737-88-0),
- les dérivés dialkylphosphonoalkyl acrylates et méthacrylates, tel le 2-(acryloyloxy)ethylphosphonic acid dimethyl ester (RN 54731-78-1) et le 2-(methacryloyloxy)ethylphosphonic acid dimethyl ester (RN 22432-83-3), le 2-(methacryloyloxy)methylphosphonic acid diethyl ester (RN 60161-88-8), le 2-(methacryloyloxy)methylphosphonic acid dimethyl ester (RN 63411-25-6), le 2-(methacryloyloxy)propylphosphonic acid dimethyl ester (RN 252210-28-9), le 2-(acryloyloxy)methylphosphonic acid diisopropyl ester (RN 51238-98-3), le 2-(acryloyloxy) ethylphosphonic acid diethyl ester (RN 20903-86-0), ainsi que leurs variantes monoacide et diacide phosphonique, tel le 2-(methacryloyloxy)ethylphosphonic acid (RN 80730-17-2), le 2-(methacryloyloxy)methylphosphonic acid (RN 87243-97-8), le 2-(methacryloyloxy)propylphosphonic acid (RN 252210-30-3), le 2-(acryloyloxy)propylphosphonic acid (RN 254103-47-4) et le 2-(acryloyloxy)ethylphosphonic acid
- l'acide vinyl phosphonique, éventuellement substitué par des groupements cyano, phényle, ester ou acétate, l'acide vinylidene phosphonique, sous forme de sel de sodium ou son ester isopropylique, le vinylphosphonate de bis(2-chloroéthyle).

Les monomères à fonction mono ou diacide phosphonique peuvent être utilisés sous forme neutralisée, partiellement ou totalement, éventuellement par une amine, par exemple la dicyclohexylamine.

Le monomère peut également être choisi parmi les analogues phosphates des monomères phosphonatés décrits ci-dessus. Ces monomères comportent alors un enchaînement -C-O-P- comparativement à l'enchaînement -C-P- des phosphonates.

On peut citer à titre de monomères phosphatés particuliers :
- le 2-(methacryloyloxy)ethyl phosphate,
- le 2-(acryloyloxy)ethyl phosphate,
- le 2-(methacryloyloxy)propyl phosphate,
- le 2-(acryloyloxy)propyl phosphate, et
- les acrylates ou méthacrylates de polyéthylène glycol omega phosphatés, ou les acrylates ou méthacrylates de polypropylène glycol omega phosphatés.

Parmi les monomères phosphonatés ou phosphatés qui entrent dans le cadre de la présente invention, on préfère utilisés les monomères suivants :
- l'acide vinyl phosphonique,
- le 2-(methacryloyloxy)ethyl phosphonic acid,
- le 2-(acryloyloxy)ethyl phosphonic acid,
- le 2-(methacryloyloxy)ethyl phosphate, et
- le 2-(acryloyloxy)ethyl phosphate.

La proportion en masse du bloc d'ancrage par rapport au poids total du copolymère à bloc de la présente invention varie entre 90 :10 et 10 : 90.

Les autres monomères du bloc d'ancrage qui entrent en jeu dans le cadre de la présente invention peuvent être des monomères ayant un caractère hydrophile (h) ou hydrophobe (H).

Parmi les monomères ayant un caractère hydrophile (h) on peut citer :
- les acides mono- et di-carboxyliques insaturés éthyléniques tels que l'acide acrylique, l'acide méthacrylique, l'acide itaconique, l'acide maléique, ou l'acide fumarique,
- les mono-alkylesters des acides di-carboxyliques insaturés éthyléniques ci-dessus, de préférence avec des alcools en C₁-C₄, ainsi que leurs dérivés N-substitués, tels que par exemple l'acrylate ou le méthacrylate de 2-hydroxyéthyle,
- les amides des acides carboxyliques insaturés, comme l'acrylamide, le méthacrylamide, ou
- les monomères éthyléniques comprenant un groupe uréido tels que l'éthylène urée ethyl méthacrylamide, ou l'éthylène urée ethyl méthacrylate, ou
- les monomères éthyléniques comportant un groupe acide sulfonique ou un de ses sels alcalins ou d'ammonium, comme par exemple l'acide vinylsulfonique, l'acide vinylbenzène sulfonique, l'acide alpha-acrylamidométhylpropanesulfonique, ou le 2-sulfoéthylène-méthacrylate, ou
- les monomères cationiques choisis parmi les (méth)acrylates d'aminoalkyle, les (méth)acrylamides d'aminoalkyle ; les monomères comprenant au moins une fonction amine secondaire, tertiaire ou quaternaire, ou un groupe hétérocyclique contenant un atome d'azote, la vinylamine, l'éthylène imine ; les sels d'ammonium de diallyldialkyl ; ces monomères étant pris seuls ou en mélanges, ainsi que sous forme de sels, les sels étant de préférence choisis de telle sorte que le contre-ion soit un halogénure comme par exemple un chlorure, ou un sulfate, un hydrosulfate, un alkylsulfate (par exemple comprenant 1 à 6 atomes de carbone), un phosphate, un citrate, un formate, un acétate, tels que le diméthyl amino éthyl (méth)acrylate, diméthyl amino propyl (méth)acrylate le ditertiobutyl aminoéthyl (méth)acrylate, le diméthyl amino méthyl (méth)acrylamide, le diméthyl amino propyl (méth)acrylamide ; l'éthylène imine, la vinylamine, la 2-vinylpyridine, la 4-vinylpyridine ; le chlorure de triméthylammonium éthyl (méth)acrylate, le méthyl sulfate de triméthylammonium éthyl acrytate, le chlorure de benzyl diméthylammonium éthyl (méth)acrylate, le chlorure de 4-benzoylbenzyl diméthyl ammonium éthyl acrylate, le chlorure de triméthyl ammonium éthyl (méth)acrylamido, le chlorure de triméthyl ammonium de vinylbenzyle ; le chlorure d'ammonium de diallyldiméthyl seuls ou en mélanges, ou leurs sels correspondants, ou
- l'alcoolpolyvinylique résultant de l'hydrolyse d'un polyacétate de vinyle par exemple, ou
- les amides cycliques de la vinylamine, tel que le n-vinylpyrrolidone, ou
- un monomère hydrophile provenant d'une modification chimique d'un bloc hydrophobe par exemple par hydrolyse d'un polyacrylate d'alkyle en polyacide acrylique.

De préférence, les unités monomères hydrophiles (h) sont choisies parmi l'acide acrylique (AA), l'acide 2-acrylamido-2-méthyl-propanesulfonique (AMPS), le sulfonate de styrène (SS), la N-vinylpyrrolidone, des monomères comprenant des groupement uréido, ou leurs mélanges.

De manière encore plus préférentielle on utilise des unités d'acide acrylique (AA) ou des monomères éthyléniques comprenant des groupements uréido.

Parmi les monomères ayant un caractère hydrophobe (H) on peut citer :
- les monomères dérivés styréniques tels que le styrène, l'alphaméthylstyrène, le paraméthylstyrène ou le paratertiobutylstyrène, ou
- les esters de l'acide acrylique ou de l'acide méthacrylique avec des alcools en C1-C12, de préférence en C1-C8, éventuellement fluorés, tels que, par exemple, l'acrylate de méthyle, l'acrylate d'éthyle, l'acrylate de propyle, l'acrylate de n-butyle, l'acrylate d'isobutyle, l'acrylate de 2-éthylhexyle, l'acrylate de t-butyle, le méthacrylate de méthyle, le méthacrylate d'éthyle, le méthacrylate de n-butyle, le méthacrylate d'isobutyle,
- les nitriles vinyliques contenant de 3 à 12 atomes de carbone, et notamment l'acrylonitrile ou le méthacrylonitrile,
- les esters vinyliques d'acides carboxyliques, comme l'acétate de vinyle, le versatate de vinyle, ou le propionate de vinyle,
- les halogénures de vinyle, par exemple le chlorure de vinyle, et
- les monomères diéniques, par exemple le butadiène ou l'isoprène.

De préférence, les unités monomères hydrophobes (H) du copolymère à blocs mis en oeuvre dans la réalisation du dépôt de l'invention sont des esters d'acide acryliques avec des alcools linéaires ou ramifiés en C1-C8, et en particulier en C1-C4, comme, par exemple, l'acrylate de méthyle, l'acrylate d'éthyle, l'acrylate de propyle, l'acrylate de butyle ou l'acrylate de 2-éthylhexyle, ou bien des dérivés styréniques tels que le styrène.

Les autres blocs du copolymère à blocs mis en oeuvre dans la réalisation du dépôt de l'invention peuvent être des homopolymères d'un monomère choisi parmi la liste de monomères (h) ou (H).

Les autres blocs du copolymère à blocs mis en oeuvre dans la réalisation du dépôt de l'invention peuvent être également des polymères statistiques d'au moins deux monomères choisis parmi la liste de monomères (h) ou (H).

Les copolymères à blocs de l'invention peuvent aussi être des copolymères triblocs.

A titre de copolymères à blocs particulièrement avantageux dans le cadre de l'invention, on peut notamment citer les copolymères diblocs dans lequel le premier bloc est un copolymère statistique à base d'acide acrylique et d'acide vinyl phosphorique contenant au moins 5%, de préférence 10%, et de manière encore plus préférentielle 20% en poids d'acide vinyl phosphorique par rapport au poids total du bloc, et le deuxième bloc est un bloc poly(acrylate de butyle), et en particulier les copolymères diblocs poly(acide acrylique-stat-acide vinylphosphonique)-poly(acrylate de butyle), dits PABu-P(AA-VPA).

Ces copolymères PABu-P(AA-VPA) sont caractérisés par un rapport massique (acide acrylique)/(acrylate de butyle) qui peut être compris entre 10 : 90 et 90 : 10, et de préférence ce rapport est compris entre 10 : 90 et 50 : 50.

D'autres copolymères à blocs particulièrement avantageux dans le cadre de l'invention sont par exemple les copolymères à blocs comprenant un bloc de copolymère statistique à base d'acide acrylique et d'acide vinyl phosphonique contenant au moins 5%, de préférence 10%, et de manière encore plus préférentielle 20% en poids d'acide vinyl phosphonique par rapport au poids total du bloc, et un second bloc d'acrylamide. Ces copolymères sont caractérisés par un rapport massique (bloc acide acrylique-stat-acide vinylphosphonique)/(bloc acrylamide) qui peut être compris entre 10 : 90 et 90 : 10, et de préférence ce rapport est compris entre 10 : 90 et 50 : 50.

En général les copolymères à blocs amphiphiles utilisés dans l'invention présentent une masse moléculaire en nombre comprise entre 1 000 et 100 000. Le plus souvent, leur masse moléculaire en nombre est comprise entre 2 000 et 60 000.

Quelle que soit sa composition chimique exacte, le copolymère à blocs mis en oeuvre dans la réalisation du dépôt de l'invention peut avantageusement être préparé selon un procédé de polymérisation radicalaire contrôlée, réalisée en présence d'un agent de contrôle.

Par « polymérisation radicalaire contrôlée », on entend un procédé de polymérisation radicalaire spécifique, également désigné par le terme de « polymérisation vivante », dans lequel on met en oeuvre des agent de contrôle tels que les chaînes polymères en formation sont fonctionnalisées par des groupements terminaux susceptibles de pouvoir être réactivés sous forme de radicaux libres grâce à des réactions de terminaison et/ou de transfert réversibles.

A titre d'exemple de tels procédés de polymérisation, on peut notamment citer :
- les procédés des demandes WO 98/58974, WO 00/75207 et WO 01/42312 qui mettent en oeuvre une polymérisation radicalaire contrôlée par des agents de contrôle de type xanthates,
- le procédé de polymérisation radicalaire contrôlée par des agents de contrôles de type dithioesters de la demande WO 97/01478
- le procédé de la demande WO 99/03894 qui met en oeuvre une polymérisation en présence de précurseurs nitroxydes,
- le procédé de polymérisation radicalaire contrôlée par des agents de contrôle de type dithiocarbamates de la demande WO 99/31144,
- le procédé de polymérisation radicalaire contrôlée par des agents de contrôle de type dithiophosphoroesters de la demande PCT/FR 01/02374.
- le procédé de la demande WO 96/30421 qui utilise une polymérisation radicalaire par transfert d'atome (ATRP),
- le procédé de polymérisation radicalaire contrôlée par des agents de contrôle de type iniferters selon l'enseignement de Otu et al., Makromol. Chem. Rapid. Commun., 3, 127 (1982),
- le procédé de polymérisation radicalaire contrôlée par transfert dégénératif d'iode selon l'enseignement de Tatemoto et al., Jap. 50, 127, 991 (1975), Daikin Kogyo Co Itd Japan et Matyjaszewski et al., Macromolecules, 28, 2093 (1995),
- le procédé de polymérisation radicalaire contrôlée par les dérivés du tetraphényléthane, divulgué par D. Braun et al. Dans Macromol. Symp. 111,63 (1996), ou encore
- le procédé de polymérisation radicalaire contrôlée par des complexes organocobalt décrit par Wayland et al. Dans J.Am.Chem.Soc. 116,7973 (1994).

De façon générale, on préfère que les copolymères à blocs mis en oeuvre selon l'invention soient issus d'un procédé de polymérisation radicalaire contrôlée mettant en oeuvre, à titre d'agent de contrôle, un ou plusieurs composés choisis parmi les dithioesters, les thioethers-thiones, les dithiocarbamates, et les xanthates. De façon particulièrement avantageuse, les copolymères à blocs utilisés selon l'invention sont issus d'une polymérisation radicalaire contrôlée réalisée en présence d'agents de contrôle de type xanthates.

Selon un mode de mise en oeuvre préféré, le copolymère à blocs utilisé peut être obtenu selon un des procédés des demandes WO 98/58974, WO 00/75207 ou WO 01/42312 qui mettent en oeuvre une polymérisation radicalaire contrôlée par des agents de contrôle de type xanthates, ladite polymérisation pouvant être mise en oeuvre notamment en masse, en solvant, ou, de préférence en émulsion aqueuse, de façon à obtenir directement le copolymère sous forme d'une solution aqueuse ou hydro-alcoolique, ou aisément applicable à une teneur comprise entre 0,001 et 10% en masse. Une solution du copolymère à une teneur comprise entre 0,001 et 10% en poids obtenue directement par un procédé de polymérisation dans le même solvant organique est également utilisable.

Ainsi, on peut mettre en oeuvre un procédé comprenant les étapes suivantes :
- on réalise une polymérisation radicalaire contrôlée menant à l'obtention d'un polymère fonctionnalisé utile à titre d'agent de contrôle dans une réaction de polymérisation radicalaire contrôlée, ladite étape étant conduite en mettant en contact :

- des molécules monomères éthyléniquement insaturées,
- une source de radicaux libres, et
- au moins un agent de contrôle de formule (I) : 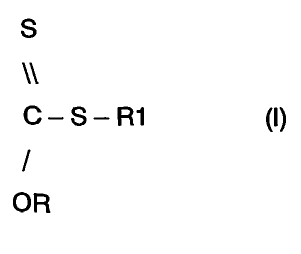
dans laquelle :
- R représente :

- H ou Cl ;
- un groupe alkyle, aryle, alcényle ou alcynyle ;
- un cycle carboné, saturé ou non, éventuellement aromatique ;
- un hétérocycle, saturé ou non, éventuellement aromatique ;
- un groupe alkylthio,
- un groupe alkoxycarbonyle, aryloxycarbonyle, carboxy, acyloxy, ou carbamoyle ;
- un groupe cyano, dialkyl- ou diaryl-phosphonato, dialkyl- ou diaryl-phosphinato ;
- une chaîne polymère,
- un groupe (R2)O-, (R2)(R'2)N-, dans lesquels les radicaux R2 et R'2, identiques ou différents, représentent chacun :

- un groupe alkyle, acyle, aryle, alcényle ou alcynyle ;
- un cycle carboné, saturé ou non, éventuellement aromatique ; ou
- un hétérocycle, saturé ou non, éventuellement aromatique ; et
- R1 représente :
   - un groupe alkyle, acyle, aryle, alcényle ou alcynyle,
   - un cycle carboné, saturé ou non, éventuellement aromatique ;
   - un hétérocycle, saturé ou non, éventuellement aromatique ; ou
   - une chaîne polymère,
   (b) on réalise, suite à l'étape (a), une étape de polymérisation radicalaire contrôlée, ou plusieurs étapes successives de polymérisations radicalaires contrôlées, ladite ou lesdites étape(s) consistant chacune à effectuer une polymérisation radicalaire contrôlée menant à l'obtention d'un copolymère à blocs fonctionnalisé utile à titre d'agent de contrôle dans une réaction de polymérisation radicalaire contrôlée , ladite ou lesdites étapes étant conduite(s) en mettant en contact :

- des molécules monomères éthyléniquement insaturées différentes de celles mis en oeuvre dans l'étape précédente,
- une source de radicaux libres, et
- le polymère fonctionnalisé issu de l'étape précédente.

Il est entendu que l'une des étapes de polymérisation (a) et (b) définies ci-dessus conduit à la formation du bloc d'ancrage, c'est à dire du bloc comprenant les fonctions phosphates et/ou phosphonates, et qu'une autre des étapes de polymérisation des étapes (a) et (b) conduit à la formation d'un autre bloc. Il est en particulier à noter que les monomères éthyléniquement insaturés mis en oeuvre dans les étapes (a) et (b) sont choisis parmi les monomères adaptés pour obtenir un copolymère à blocs tel que défini précédemment.

De façon générale, les étapes de polymérisation (a) et (b) sont mises en oeuvre dans un milieu solvant constitué d'eau et/ou d'un solvant organique tel que le tetrahydrofuranne ou un alcool aliphatique en C1-C8, linéaire, cyclique ou ramifié tel que le méthanol, l'éthanol, ou le cyclohexanol, ou encore un diol tel que l'éthylèneglycol.

Un solvant alcoolique est plus particulièrement recommandé dans le cadre de la mise en oeuvre de monomères hydrophiles du type de l'acide acrylique (AA), de l'acrylamide (AM), de l'acide 2-acrylamido-2-méthyl-propanesulfonique (AMPS), et du sulfonate de styrène (SS) et/ou dans le cadre de la mise en oeuvre de monomères hydrophobes tels que l'acrylate de n-butyle, l'acrylate d'isobutyle, l'acrylate de 2-éthylhexyle, ou l'acrylate de t-butyle.

De façon générale, les revêtements obtenus par l'application de la composition aqueuse filmogène de l'invention sur une surface métallique sont tels qu'ils présentent une cohésion forte entre la surface et le revêtement réalisé.

En règle générale, l'affinité du revêtement pour la surface métallique est telle que la force pelage à 90° de ce dépôt à une vitesse de pelage de 20mm/mn, mesurable par exemple à l'aide d'un dynamomètre de type Adamel-Lhomagry DY-30, est généralement supérieure ou égal à 0,5 N/mm, avantageusement supérieure à 1 N/mm, voire à 2 N/mm. Dans certains cas la force de pelage peut même être supérieure à 3 N/mm.

Cette forte affinité du revêtement pour le support se traduit naturellement par une très bonne stabilité du revêtement sur la surface.

En outre, l'adhésion du revêtement sur la surface n'est pas remise en cause en présence d'eau.

Ainsi, même lorsque le matériau est maintenu pendant une durée de 72 heures dans des conditions d'humidité relatives de 100%, la force pelage à 90° du dépôt reste généralement supérieure à 0,5 N/mm, et il n'est pas rare qu'elle reste supérieure à 1 N/mm, voire à 2 N/mm à une vitesse de pelage de 20 mm/mn.

Dans le cas des surfaces peintes, la stabilité du dépôt peut également être mise en évidence par un test de résistance à l'abrasion humide, selon la norme DYN 53778, consistant à frotter le revêtement obtenu avec une brosse de dureté et de poids normalisés sous un goutte à goutte d'eau additivée de tensioactif qui entretient le mouillage de la surface, et à mesurer le nombre de cycle de brossage nécessaire pour retirer le revêtement sur toute son épaisseur de façon à découvrir le support.

Dans le cas des surfaces peintes, la stabilité du dépôt peut également être mise en évidence par un test de quadrillage, selon la norme ISO 2409 de novembre 1994 « Peintures et vernis - essai de quadrillage », consistant à évaluer la résistance d'un revêtement à être séparé de son support métallique lorsqu'on y pratique des incisions jusqu'au support à l'aide d'un cutter sous forme d'un quadrillage et qu'on tente d'arracher un ruban adhésif transparent normalisé sensible à la pression préalablement collé sur le revêtement.

Dans le cas des surfaces peintes, la stabilité du dépôt peut également être mise en évidence par un test d'emboutissage, selon la norme ISO 1520 de juin 1995 « Peintures et vernis - essai d'emboutissage », consistant à évaluer la résistance d'une couche de peinture, vernis ou produit assimilé aux craquelures et/ou au décollement d'une surface métallique, lorsqu'elle est soumise à une déformation graduelle par emboutissage dans des conditions normalisées.

Dans le cas des surfaces peintes, la stabilité du dépôt peut également être mise en évidence par un test de chute d'une masse, selon la norme ISO 6272 de juin 1993 « Peintures et vernis - Essai de chute d'une masse », consistant à évaluer la résistance d'un revêtement au craquelage ou au décollement de son support métallique lorsqu'il est soumis à une déformation provoquée par une masse tombante, lâchée dans des conditions normalisées.

L'objet et les avantages de la présente invention apparaîtront de façon encore plus évidente au vu des différents exemples de mise en oeuvre exposés ci-après.

### Exemple 1 : Synthèse d'un copolymère dibloc à base d'acrylamide, d'acide acrylique et d'acide vinyl phosphonique, noté PAm-block-P(AA-stat-VPA)

### Premier bloc

Dans un ballon en verre de 500 ml, on introduit 50 g d'une solution d'acrylamide à 50% dans l'eau, 75 g d'eau, 4 g d'acétone, 117 mg d'acide 4,4-azo-bis-4-cyanovalerique (ACV)et 174 mg de *O*-ethyl-*S*-(1-methoxycarbonyl)ethylenyl) xanthate (CH₃CHCO₂CH₃)S(C=S)OEt. Le milieu réactionnel est porté à 70°C pendant 5 heures.
Un échantillon est ensuite prélevé et analysé. Une analyse en chromatographie HPLC révèle l'absence d'acrylamide résiduel. Par chromatographie d'exclusion stérique (CES) dans l'eau étalonnée par des étalons linéaires de polyoxyde d'ethylène, la masse molaire moyenne en nombre est mesurée: Mₙ=24000 g/mol, M_{w}/Mₙ=1.89.

### Second bloc

Au polymère en solution issu de la première étape sont ajoutés 1,32 g d'acide vinyl phosphonique et 70 mg d'ACV. Le mélange est porté à 70°C et une solution de 7,14 g d'acide acrylique dans 34,7 g d'eau est additionnée pendant 8 heures. Pendant cette introduction, 70 mg d'ACV sont introduits après 4 heures. Ce même ajout est renouvelé après 8 heures. La réaction est maintenue à cette température pendant 5 heures après la fin de l'introduction de la solution de monomère.
Un échantillon est prélevé puis analysé. La conversion en acide acrylique est totale (HPLC) . La conversion en acide vinyl phosphonique est de 50% (determiné par RMN 31 P).

Le copolymère à blocs issu de ce procédé a été purifié par dialyse (seuil de coupure de la membrane: 1000 Daltons). Après 3 jours de dialyse, le copolymère est totalement purifié de son monomère résiduel (RMN 31 P). Par CES dans l'eau, on mesure Mₙ=33300 g/mol, M_{w}/Mₙ=1.74. Le caractère contrôlée de la réaction est conforté par une réponse intense du polymère par CES à détection UV à une longueur d'onde de 290 nm, caractéristique du groupement xanthate en bout de chaine du copolymère.

### Exemple 2 : Synthèse d'un copolymère dibloc à base d'acrylate de butyle, d'acide acrylique et d'acide vinyl phosphonique, noté PABu-block-P(AA-stat-VPA).

### Premier bloc

Dans un ballon en verre de 250 ml, on introduit 20 g d'acrylate de butyle, 32,6 g d'acétone, 219 mg d'azobiisobutyronitrile (AIBN) et 1,39 g de O-ethyl-S-(1-methoxycarbonyl)ethylenyl) xanthate (CH₃CHCO₂CH₃)S(C=S)OEt. Le milieu réactionnel est porté à 70°C pendant 5 heures. 109 mg d'AIBN sont rajoutés 2 heures après le début de la réaction.
Un échantillon est ensuite prélevé et analysé. Par CES étalonnée par des étalons linéaires de polystyrène, la masse molaire moyenne en nombre est mesurée : Mₙ=2800 g/mol, M_{w}/Mₙ=1.91.

### Second bloc

Au polymère en solution issu de la première étape sont ajoutés 10,58 g d'acide vinyl phosphonique et 219 mg d' AIBN. Le mélange est porté à 70°C et une solution de 57,14 g d'acide acrylique dans 100,9 g d'eau est additionnée pendant 8 heures. Pendant cette introduction, une solution de 328 mg d' AIBN dans 2 g d'acétone est ajoutée après 4 heures. Ce même ajout est renouvelé après 8 heures. La réaction est maintenue à cette température pendant 5 heures après la fin de l'introduction de la solution de monomère.
Un échantillon est prélevé puis analysé. La conversion en acide acrylique est totale (HPLC) . La conversion en acide vinyl phosphonique est de 73% (determiné par RMN 31 P).

Le copolymère à blocs issu de ce procédé a été purifié par dialyse (seuil de coupure de la membrane: 1000 Daltons). Après 7 jours de dialyse, le copolymère est totalement purifié de son monomère résiduel (RMN 31 P). Le copolymère à blocs une fois purifié se présente comme une dispersion stable dans l'eau.

### Exemple 3 : Synthèse d'un copolymère dibloc à base d'acrylate de butyle, d'acide acrylique et d'acide vinyl phosphonique, noté PABu-block-P(AA-stat-VPA)

### Premier bloc

Dans un ballon en verre de 250 ml, on introduit 20 g d'acrylate de butyle, 32,6 g d'acétone, 219 mg d'azobiisobutyronitrile (AIBN) et 1,39 g de O-ethyl-S-(1-methoxycarbonyl)ethylenyl) xanthate (CH₃CHCO₂CH₃)S(C=S)OEt. Le milieu réactionnel est porté à 70°C pendant 5 heures. 109 mg d'AIBN sont rajoutés 2 heures après le début de la réaction.
Un échantillon est ensuite prélevé et analysé. Par CES étalonnée par des étalons linéaires de polystyrène, la masse molaire moyenne en nombre est mesurée : Mₙ=2800 g/mol, M_{w}/Mₙ=1.91.

### Second bloc

Au polymère en solution issu de la première étape sont ajoutés 3,18 g d'acide vinyl phosphonique et 219 mg d' AIBN. Le mélange est porté à 70°C et une solution de 17,14 g d'acide acrylique dans 29,79 g d'eau est additionnée pendant 3 heures. Pendant cette introduction, une solution de 328 mg d' AIBN dans 2 g d'acétone est ajoutée après 3 heures. Ce même ajout est renouvelé après 5 heures. La réaction est maintenue à cette température pendant 5 heures après la fin de l'introduction de la solution de monomère.
Un échantillon est prélevé puis analysé. La conversion en acide acrylique est totale (HPLC) . La conversion en acide vinyl phosphonique est de 52% (determiné par RMN 31 P).
Le copolymère à blocs issu de ce procédé a été purifié par dialyse (seuil de coupure de la membrane : 1000 Daltons). Après 7 jours de dialyse, le copolymère est totalement purifié de son monomère résiduel (RMN 31 P). Le copolymère à blocs une fois purifié se présente comme une dispersion stable dans l'eau.

### Exemple 4 : Synthèse d'un copolymère dibloc à base d'acrylate de butyle, d'acrylamide et d'acide vinyl phosphonique, noté PABu-block-P(Am-stat-VPA).

### Premier bloc

Dans un ballon en verre de 100 ml, on introduit 7 g d'acrylate de butyle, 30.4 g de THF, 76,5 mg d'azobiisobutyronitrile (AIBN) et 486 mg de O-ethyl-S-(1-methoxycarbonyl)ethyl) xanthate (CH₃CHCO₂CH₃)S(C=S)OEt. Le milieu réactionnel est porté à 70°C pendant 5 heures. 38,2 mg d'AIBN sont rajoutés 2 heures après le début de la réaction.
Un échantillon est ensuite prélevé et analysé. Par CES étalonnée par des étalons linéaires de polystyrène, la masse molaire moyenne en nombre est mesurée : Mₙ=2900 g/mol, M_{w}/Mₙ=1.88.

### Second bloc

Au polymère en solution issu de la première étape sont ajoutés 4,49 g d'acide vinyl phosphonique, 76.5 mg d' AIBN et 91 g d'eau. Le mélange est porté à 70°C et 47,9 g d'une solution aqueuse d'acrylamide à 50% en poids sont additionnés pendant 8 heures. Pendant cette introduction, 115 mg d' AIBN sont ajoutés après 4 heures. Ce même ajout est renouvelé après 8 heures. La réaction est maintenue à cette température pendant 2 heures après la fin de l'introduction de la solution de monomère.
Un échantillon est prélevé puis analysé. La conversion en acrylamide est totale (HPLC) . La conversion en acide vinyl phosphonique est de 56% (determiné par RMN 31P).
Le copolymère à blocs issu de ce procédé a été purifié par dialyse (seuil de coupure de la membrane: 1000 Daltons). Après 7 jours de dialyse, le copolymère est totalement purifié de son monomère résiduel (RMN 31 P). Le copolymère à blocs une fois purifié se présente comme une dispersion stable dans l'eau.

### Exemple 5 : Synthèse d'un copolymère dibloc à base d'acrylate de butyle, d'acide acrylique et d'acide vinyl phosphonique, noté PABu-block-P(AA-stat-VPA).

### Premier bloc

Dans un ballon en verre de 1 litre, on introduit 70 g d'acrylate de butyle, 114 g d'éthanol, 765 mg d'azobiisobutyronitrile (AIBN) et 4,86 g de O-ethyl-S-(1-methoxycarbonyl)ethyl) xanthate (CH₃CHCO₂CH₃)S(C=S)OEt. Le milieu réactionnel est porté à 70°C pendant 5 heures. 382 mg d'AIBN sont rajoutés 2 heures après le début de la réaction.
Un échantillon est ensuite prélevé et analysé. Par CES étalonnée par des étalons linéaires de polystyrène, la masse molaire moyenne en nombre est mesurée : Mₙ=2750 g/mol, M_{w}/Mₙ=1.73.

### Second bloc

Au polymère en solution issu de la première étape sont ajoutés 87,5 g d'acide vinyl phosphonique, 1,15 g d' AIBN et 342 g d'éthanol. Le mélange est porté à 70°C et une solution de 186,7 g d'acide acrylique dans 200 g d'éthanol est additionnée pendant 7 heures. Pendant cette introduction, 1,15 g d' AIBN sont ajoutés après 3 heures. Ce même ajout est renouvelé après 6 heures. La réaction est maintenue à cette température pendant 2 heures après la fin de l'introduction de la solution de monomère.
Un échantillon est prélevé puis analysé. La conversion en acide acrylique est totale (HPLC) . La conversion en acide vinyl phosphonique est de 52% (determiné par RMN 31 P). Une analyse RMN 13C a permis de démontrer que 28.5 % des motifs acide acrylique ont été esterifiés en motifs acrylate d'éthyle.
Le copolymère à blocs issu de ce procédé a été purifié par dialyse (seuil de coupure de la membrane : 1000 Daltons). Après 7 jours de dialyse, le copolymère est totalement purifié de son monomère résiduel (RMN 31 P). Le copolymère à blocs une fois purifié se présente comme une dispersion stable dans l'eau.

### Exemple 6 : Synthèse d'un copolymère polyol acrylique phosphaté dibloc

### Synthèse du 1^{er} bloc

Dans un ballon en verre, on prépare une solution A contenant 1433 g d'acétate de butyle, 680 g d'acrylate de butyle, 238 g d'acrylate de 2-hydroxyéthyle, 238 g de méthacrylate de 2-hydroxyéthyle, 374 g de styrène et 170 g de méthacrylate de méthyle.
Dans un réacteur en verre de 6L muni d'une double enveloppe et d'une ancre d'agitation, sont introduits 10 % en poids de la solution A et 23.6 g de O-ethyl-S-(1-methoxycarbonyl)ethyl) xanthate (CH₃CHCO₂CH₃)S(C=S)OEt. Le réacteur est dégazé à l'argon pendant 15 minutes, puis la température est augmentée jusqu'à 115°C. Lorsque cette température est atteinte, 6.92 g de 1,1'-azobis(cyclohexane-1-carbonitrile) (amorceur) sont introduits, puis l'introduction des 90% restant de la solution A est démarrée, et se poursuit pendant 6 heures à vitesse constante. En même temps, l'introduction d'une solution de 20.77 g de 1,1'-azobis(cyclohexane-1-carbonitrile) dans 200 g d'acétate de butyle est initiée et se poursuit pendant 11 heures. En fin d'introduction de la solution d'amorceur, la température est maintenue à 115°C pendant une heure supplémentaire.

Un échantillon est prélevé et analyse par chromatographie d'exclusion stérique (C.E.S). La masse molaire moyenne en nombre (Mn) est mesurée par élution du polymère dans le THF, avec un étalonnage par du polystyrène. Mn= 6700 g/mole.

Une analyse par chromatographie gazeuse montre que les monomères résiduels sont inférieurs à 2% en poids comparativement aux monomères initialement mis en jeu lors de la polymérisation.

### Synthèse du copolymère dibloc

Dans un ballon en verre, on prépare une solution B contenant 393 g d'acétate de butyle, 181 g d'acrylate de butyle, 63.4 g d'acrylate de 2-hydroxyéthyle, 18.1 g de méthacrylate de 2-hydroxyéthyle, 99.7 g de styrène, 45.3 g de méthacrylate de méthyle et 45.3 g de le 2-(méthacryloyloxy) ethyl phosphate CH₂=C(CH₃)CH₂CH₂PO₃H.

A la solution de polymère issue de l'étape 1, à 115°C, sont rajoutés 6.92 g de 1,1'-azobis(cyclohexane-1-carbonitrile). La solution B est alors introduite pendant 3 heures à vitesse constante. En même temps, l'introduction d'une solution de 20.77 g de 1,1'-azobis(cyclohexane-1-carbonitrile) dans 200 g d'acétate de butyle est initiée et se poursuit pendant 5 heures. En fin d'introduction de la solution d'amorceur, la température est maintenue à 115°C pendant une heure supplémentaire.

Un échantillon est prélevé et analyse par chromatographie d'exclusion stérique (C.E.S). La masse molaire moyenne en nombre (Mn) est mesurée par élution du polymère dans le THF, avec un étalonnage par du polystyrène. Mn= 10500 g/mole.

Une analyse par chromatographie gazeuse montre que les monomères résiduels sont inférieurs à 2% en poids comparativement aux monomères initialement mis en jeu lors de la polymérisation.

### Exemple 7: Exemple de test de protection contre la corrosion des polymères à blocs des exemples 4 et 5

Une formulation de peinture classique sans additif (blanc) est comparée à une composition additivée de l'invention.

### 1) Préparation du blanc

### a) Préparation de 200g de solution de Rhodafac RS41 0 :

- peser 111,6g d'eau
- ajouter 28,4g d'ammoniaque à 20 % et mélanger
- ajouter 60g de Rhodafac RS91 0 commercialisé par la société Rhodia
- agiter 15 minutes

### b) Préparation de la peinture

Agiter à basse température
- peser 37,62g d'eau du robinet
- ajouter 0,31 g d'ammoniaque à 20 %
- ajouter 0,38g de dispex GA40 (41% d'extrait sec, soit 0,16g sec) commercialisé par la société Allied Colloid
- ajouter 0,23g de Rhodoline DF 681F (50% d'extrait sec soit 0,12g sec) commercialisé par la société Rhodia
- ajouter 24,35g de TiO₂ RCL595 commercialisé par la société Millenium (baisser l'agitation pour cette étape afin d'éviter la formation de mousse) laisser agiter pendant 20 minutes. Cette étape permet d'obtenir une bonne dispersion du TiO₂
- ajouter 3,83g d'Acétate de Butyl Carbitol ou ABC
- ajouter 46,43g de latex Rhodopas DS910 (50% d'extrait sec soit 23,22g sec) commercialisé par la société Rhodia (augmenter l'agitation : dispermat réglé à 0,8)
- ajouter 1,59g de Texanol (il est préférable d'ajouter le Texanol après le latex afin d'éviter la formation de « grains »)
- ajouter 0,64g de Rhodafac RS410 préparé au paragraphe a) (30% d'extrait sec soit 0,19g sec)
- ajouter 4,62g de Rhodoline RH-5320 (25% d'extrait sec soit 1,16g sec) épaississant commercialisé par la société Rhodia (augmenter la vitesse d'agitation : dispermat réglé à 2).

### 2) Préparation des peintures additivées

La peinture additivée est préparée de la même façon que le blanc, à la seule différence qu'à la fin de la préparation décrite au point b) on ajoute l'additif polymère de l'exemple 4 ou de l'exemple 5 sous la forme d'une solution à une concentration de 2% en sec/sec par rapport au taux de latex Rhodopas DS910 dans la peinture.

Les peintures additivés sont ensuite homogénéisées à l'aide d'un agitateur « à vibration ».
Les peintures additivés sont ensuite filtrées sur toile de 50µm de manière à enlever tous les « grains » et bulles qui pourraient accélérer la corrosion sur plaque et fausser les résultats.

### 3) Préparation des plaques de peinture

La peinture est déposée au tire-film de 300µm sur des plaques d'acier normalisées R-46 fournies par Q-Panel.

### 4) Evaluation des phosphonates par brouillard salin

Les plaques d'acier peintes sont vieillies 20 heures en brouillard salin puis une évaluation visuelle permet de classer ces peintures.

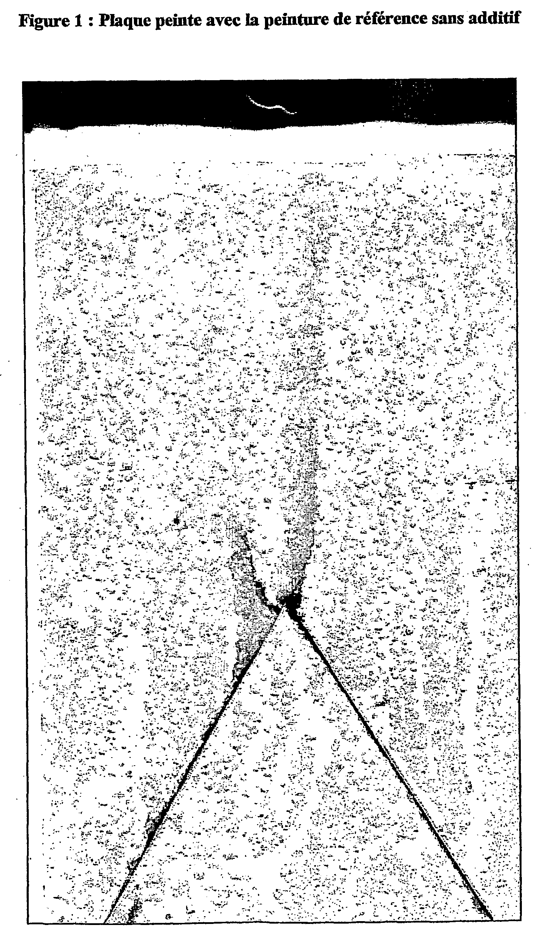

La figure 1 représente la plaque d'acier peinte avec la peinture de référence sans additif (blanc).

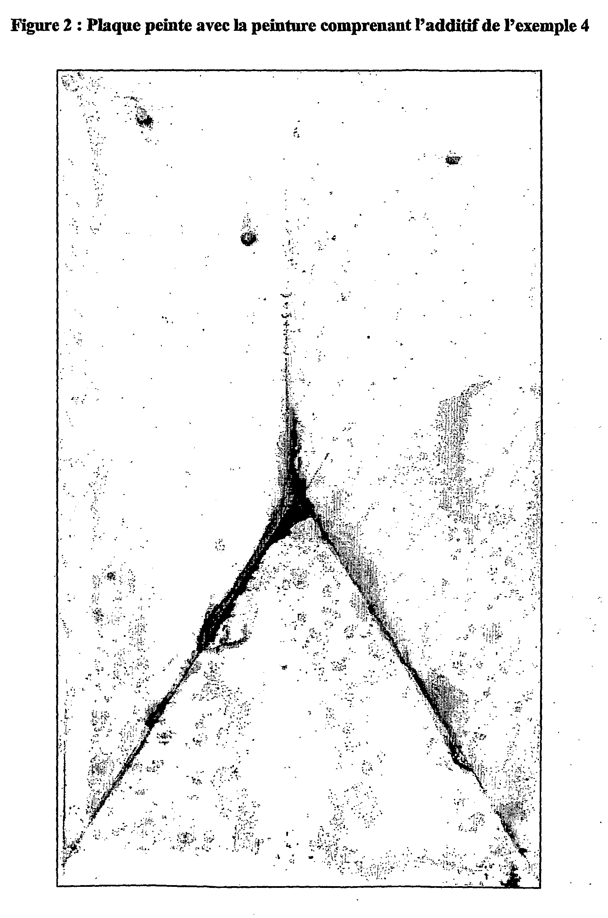

La figure 2 représente la plaque d'acier peinte avec la peinture comprenant l'additif de l'exemple 4.

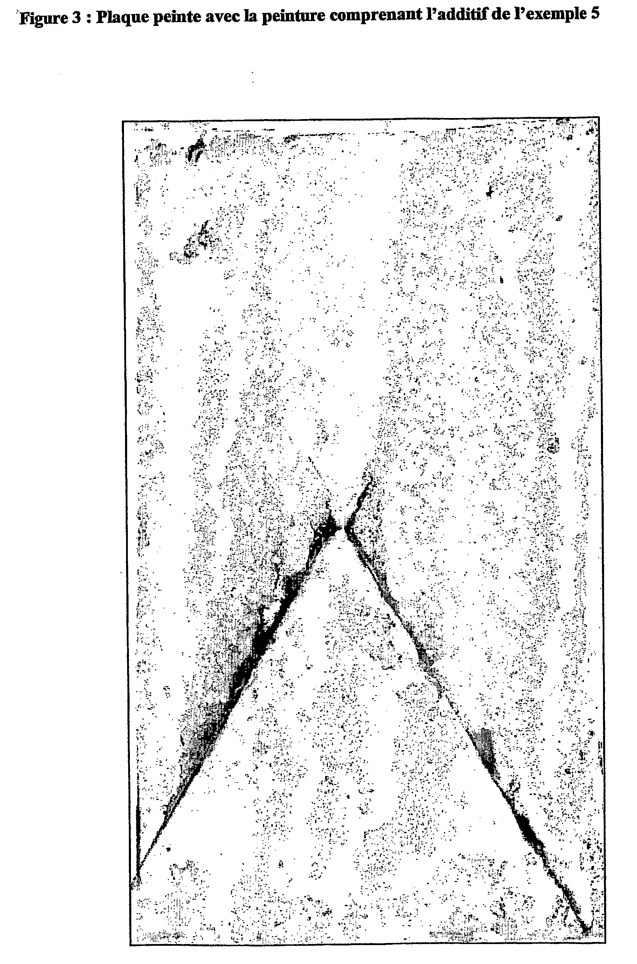

La figure 3 représente la plaque d'acier peinte avec la peinture comprenant l'additif de l'exemple 5.

Les peintures additivées avec des composés des exemples 4 et 5 de l'invention protègent la plaque d'acier de la corrosion.

### Exemple 8: Application d'un copolymère polyol acrylique phosphaté dibloc en tant qu'additif dans une formulation de vernis polyuréthanne bicomposant

Le polyol acrylique de l'exemple 7 est additionné à hauteur de 10% en sec/sec à une résine G-Cure192BL80. La formulation est ajustée à un taux de solide de 60%. Du dibutyl dilaurate d'étain est additionné à hauteur de 0.008% par rapport au taux de solide de la formulation. Le Tolonate HDT (réticulant isocyanate, Rhodia) est ajouté de telle sorte que le rapport NCO/OH soit égal à 1.05. Un film est ensuite préparé, de telle sorte que l'épaisseur du film sec soit d'environ 1 mm. Le substrat sur lequel le film est déposé est l'aluminium.

Les propriétés d'adhésion de ce vernis sur l'aluminium ont été comparées à celles obtenues en l'absence de l'additif polymère phosphaté.

Pour les deux formules, une réticulation efficace a été mise en évidence après 24 h et 7 jours, par spectroscopie IR, par des mesures de dureté Persoz, et par des mesures de résistance au solvant méthyléthyl cétone.

Une évaluation de l'adhésion a été entreprise par des tests de quadrillage, sur une échelle de notation de 0 à 5. La note 0 correspond à une très mauvaise adhésion, 5 correspond à une excellente adhésion.

Les résultats obtenus sont les suivants.

En absence d'additif polymère dibloc phosphaté. Note=1.
En présence de 10% d'additif polymère dibloc phosphaté. Note=5.

L'additif polymère dibloc phosphaté apporte ainsi un accroissement significatif de l'adhésion du vernis polyuréthanne sur l'aluminium.

## Revendications

1. Utilisation d'un copolymère à blocs dont au moins un bloc comprend des fonctions phosphates et/ou des fonctions phosphonates, ledit copolymère étant éventuellement mis en solution dans un solvant tel qu'un solvant organique, de l'eau ou un mélange eau-alcool, à titre d'additif au sein d'une composition filmogène, pour assurer ou promouvoir l'adhésion de ladite composition sur une surface métallique.

2. Utilisation d'un copolymère à blocs dont au moins un bloc comprend des fonctions phosphates et/ou des fonctions phosphonates, ledit copolymère étant éventuellement mis en solution dans un solvant tel qu'un solvant organique, de l'eau ou un mélange eau-alcool, à titre d'additif au sein d'une composition filmogène, pour protéger contre la corrosion une surface métallique, sur laquelle la composition filmogène est appliquée de manière à obtenir un revêtement.

3. Utilisation selon la revendication 1 ou 2, **caractérisée en ce que** la surface métallique est une surface à base d'un élément de la classification périodique des éléments choisis dans le groupe des alcalins ou alcalino-terreux, des métaux de transition, de l'Aluminium, du Gallium, de l'Indium, du Talium, du Silicium, du Germanium, de l'Etain, du Plomb, de l'Arsenic, de l'Antimoine, du Bismuth, du Tellure, du Polonium ou de l'Astate, ainsi que leurs oxydes ou leurs alliages.

4. Utilisation selon l'une quelconque des revendications 1 à 3, **caractérisée en ce que** la surface métallique est une surface à base d'aluminium, de duralumin, de zinc, d'étain, de cuivre, des alliages du cuivre tels que le bronze ou le laiton, de fer, d'acier éventuellement inoxydable ou galvanisé, d'argent, ou de vermeil.

5. Utilisation selon l'une quelconque des revendications 1 à 4, **caractérisée en ce que** le bloc comprenant des fonctions phosphates et/ou phosphonates est un homopomymère à base de monomère comprenant des fonctions phosphates ou phosphonates.

6. Utilisation selon l'une quelconque des revendications 1 à 4, **caractérisée en ce que** le bloc comprenant des fonctions phosphates et/ou phosphonates est un polymère statistique à base d'au moins un monomère comprenant comprenant l'une ou l'autre de ces fonctions phosphates ou phosphonates ou leurs mélanges dans une quantité desdits monomères comprise entre 0,1 et 100% en poids desdits monomères par rapport au poids total du bloc.

7. Utilisation selon la revendication 6, **caractérisée en ce que** la quantité desdits monomères est comprise entre 0,5% et 50% en poids desdits monomères par rapport au poids total du bloc.

8. Utilisation selon l'un quelconque des revendications 6 ou 7, **caractérisée en ce que** la quantité desdits monomères est comprise entre 2% et 20% en poids desdits monomères par rapport au poids total du bloc.

9. Utilisation selon l'un quelconque des revendications 5 à 8, **caractérisée en ce que** la proportion en masse du bloc d'ancrage par rapport au poids total du copolymère à bloc de la présente invention varie entre 90 :10 et 10 : 90.

10. Utilisation selon l'une quelconque des revendications 5 à 9, **caractérisée en ce que** le monomère comprenant des fonctions phosphates ou phosphonates est choisi parmi :
- les dérivés N-methacrylamidomethylphosphonic acid esters, en particulier l'ester n-propylique (RN 31857-11-1), l'ester méthylique (RN 31857-12-2), l'ester éthylique (RN 31857-13-3), l'ester n-butylique (RN 31857-14-4), l'ester isopropylique (RN 51239-00-0), ainsi que leurs dérivés monoacide et diacide phosphonique, tel le N-methacrylamidomethylphosphonic diacid (RN 109421-20-7.),
- les dérivés N-methacrylamidoethylphosphonic acid esters, tel le N-methacrylamidoethyl phosphonic acid dimethyl ester (RN 266356-40-5), le N-methacrylamidoethyl phosphonic acid di(2-butyl-3,3-dimethyl) ester (RN 266356-45-0), ainsi que leurs dérivés monoacide et diacide phosphonique, tel le N-methacrylamidoethylphosphonic diacid (RN 80730-17-2),
- les dérivés N-acrylamidomethylphosphonic acid esters tels le N-acrylamidomethyl phosphonic acid dimethyl ester (RN 24610-95-5), le N-acrylamidomethyl phosphonic acid diethyl ester (RN 24610-96-6), le bis(2-chloropropyl) N-acrylamidomethyl phosphonate (RN 50283-36-8), ainsi que leurs dérivés monoacide et diacide phosphonique tel le N-acrylamidomethyl phosphonic acid (RN 151752-38-4),
- les dérivés vinylbenzylphosphonate dialkyl ester, en particulier les dérivés di(n-propyl) (RN 60181-26-2), di(isopropyl) (RN 159358-34-6), diethyl (RN 726-61-4), dimethyl (RN 266356-24-5), di(2-butyl-3,3-dimethyl) (RN 266356-29-0) et di (t-butyl) ester (RN 159358-33-5), ainsi que leurs variantes monoacide et diacide phosphonique, tel le vinylbenzylphosphonic diacid (RN 53459-43-1),
- le diéthyl 2-(4-vinylphenyl)ethanephosphonate (RN 61737-88-0),
- les dérivés dialkylphosphonoalkyl acrylates et méthacrylates, tel le 2-(acryloyloxy)ethylphosphonic acid dimethyl ester (RN 54731-78-1) et le 2-(methacryloyloxy)ethylphosphonic acid dimethyl ester (RN 22432-83-3), le 2-(methacryloyloxy)methylphosphonic acid diethyl ester (RN 60161-88-8), le 2-(methacryloyloxy)methylphosphonic acid dimethyl ester (RN 63411-25-6), le 2-(methacryloyloxy)propylphosphonic acid dimethyl ester (RN 252210-28-9), le 2-(acryloyloxy)methylphosphonic acid diisopropyl ester (RN 51238-98-3), le 2-(acryloyloxy) ethylphosphonic acid diethyl ester (RN 20903-86-0), ainsi que leurs variantes monoacide et diacide phosphonique, tel le 2-(methacryloyloxy)ethylphosphonic acid (RN 80730-17-2), le 2-(methacryloyioxy)methylphosphonic acid (RN 87243-97-8), le 2-(methacryloyloxy)propylphosphonic acid (RN 252210-30-3), le 2-(acryloyloxy)propylphosphonic acid (RN 254103-47-4) et le 2-(acryloyloxy)ethylphosphonic acid
- le vinyl phosphonic acid, éventuellement substitué par des groupements cyano, phényle, ester ou acétate, le vinylidene phosphonic acid, sous forme de sel de sodium ou son ester isopropylique, le vinylphosphonate de bis(2-chloroéthyle) ;
ainsi que leurs analogues phosphates, et
- les acrylates ou méthacrylates de polyéthylène glycol omega-phosphatés, ou les acrylates ou méthacrylates de polypropylène glycol omega-phosphatés.

11. Utilisation selon l'une des revendications 1 à 10, **caractérisée en ce que** le copolymère à blocs mis en oeuvre est obtenu à l'issu d'un procédé de polymérisation radicalaire contrôlée, utilisant de préférence, à titre d'agent de contrôle, un ou plusieurs composés choisis parmi les dithioesters, les thioethers-thiones, les dithiocarbamates, et les xanthates, ladite polymérisation étant mise en oeuvre notamment en masse, en solvant, ou, en émulsion aqueuse, de façon à obtenir directement le copolymère sous forme d'une solution aqueuse ou hydro-alcoolique.

12. Utilisation selon la revendication 11, **caractérisée en ce que** la concentration de copolymère à blocs dans la composition filmogène est comprise entre 0,001 et 20 % en masse par rapport à la masse totale de l'extrait sec de la composition filmogène.

13. Utilisation selon la revendication 12, **caractérisée en ce que** la concentration de copolymère à blocs dans la composition filmogène est comprise entre 0,005 et 10% en masse par rapport à la masse totale de l'extrait sec de la composition filmogène.

14. Utilisation selon la revendication 13, **caractérisée en ce que** la concentration de copolymère à blocs dans la composition filmogène est comprise entre 0,01 et 5% en masse par rapport à la masse totale de l'extrait sec de la composition filmogène.

## Claims

1. The use of a block copolymer, at least one block of which comprises phosphate functional groups and/or phosphonate functional groups, said copolymer optionally being dissolved in a solvent, such as an organic solvent, water or a water/alcohol mixture, as additive in a film-forming composition, to provide or promote the adhesion of said composition to a metal surface.

2. The use of a block copolymer, at least one block of which comprises phosphate functional groups and/or phosphonate functional groups, said copolymer optionally being dissolved in a solvent, such as an organic solvent, water or a water/alcohol mixture, as additive in a film-forming composition, to protecte from corrosion a metal surface onto which the film-forming composition is applied so that a coating is obtained.

3. The use as claimed in claim 1 or 2, **characterized in that** the metal surface is a surface based on an element of the Periodic Table of the Elements chosen from the group of the alkali metals or alkaline earth metals, the transition metals, aluminum, gallium, indium, thallium, silicon, germanium, tin, lead, arsenic, antimony, bismuth, tellurium, polonium or astatine, and their oxides or their alloys.

4. The use as claimed in any one of claims 1 to 3, **characterized in that** the metal surface is a surface based on aluminum, duralumin, zinc, tin, copper, copper alloys, such as bronze or brass, iron, steel, optionally stainless or galvanized, silver or vermeil.

5. The use as claimed in any one of claims 1 to 4, **characterized in that** the block comprising phosphate and/or phosphonate functional groups is a homopolymer based on a monomer comprising phosphate or phosphonate functional groups.

6. The use as claimed in any one of claims 1 to 4, **characterized in that** the block comprising phosphate and/or phosphonate functional groups is a random polymer based on at least one monomer comprising one or other of these phosphate or phosphonate functional groups or their mixtures in an amount of between 0.1 and 100% by weight of said monomers with respect to the total weight of the block.

7. The use as claimed in claim 6, **characterized in that** the amount of said monomers is between 0.5% and 50% by weight of said monomers with respect to the total weight of the block.

8. The use as claimed in either one of claims 6 and 7, **characterized in that** the amount of said monomers is between 2% and 20% by weight of said monomers with respect to the total weight of the block.

9. The use as claimed in any one of claims 5 to 8, **characterized in that** the proportion by mass of the anchoring block with respect to the total weight of the block copolymer of the present invention varies between 90:10 and 10:90.

10. The use as claimed in any one of claims 5 to 9, **characterized in that** the monomer comprising phosphate or phosphonate functional groups is chosen from:
- N-methacrylamidomethylphosphonic acid ester derivatives, in particular the n-propyl ester (RN 31857-11-1), the methyl ester (RN 31857-12-2), the ethyl ester (RN 31857-13-3), the n-butyl ester (RN 31857-14-4) or the isopropyl ester (RN 51239-00-0), and their phosphonic monoacid and diacid derivatives, such as N-methacrylamidomethylphosphonic diacid (RN 109421-20-7),
- N-methacrylamidoethylphosphonic acid ester derivatives, such as N-methacrylamidoethylphosphonic acid dimethyl ester (RN 266356-40-5) or N-methacrylamidoethylphosphonic acid di(2-butyl-3,3-dimethyl) ester (RN 266356-45-0), and their phosphonic monoacid and diacid derivatives, such as N-methacrylamidoethylphosphonic diacid (RN 80730-17-2),
- N-acrylamidomethylphosphonic acid ester derivatives, such as N-acrylamidomethylphosphonic acid dimethyl ester (RN 24610-95-5), N-acrylamidomethylphosphonic acid diethyl ester (RN 24610-96-6) or bis(2-chloropropyl) N-acrylamidomethylphosphonate (RN 50283-36-8), and their phosphonic monoacid and diacid derivatives, such as N-acrylamidomethylphosphonic acid (RN 151752-38-4),
- the vinylbenzylphosphonate dialkyl ester derivatives, in particular the di(n-propyl) (RN 60181-26-2), di(isopropyl) (RN 159358-34-6), diethyl (RN 726-61-4), dimethyl (RN 266356-24-5), di(2-butyl-3,3-dimethyl) (RN 266356-29-0) and di(t-butyl) (RN 159358-33-5) ester derivatives, and their phosphonic monoacid and diacid alternative forms, such as vinylbenzylphosphonic diacid (RN 53459-43-1),
- diethyl 2-(4-vinylphenyl)ethanephosphonate (RN 61737-88-0),
- dialkylphosphonoalkyl acrylate and methacrylate derivatives, such as 2-(acryloyloxy)ethylphosphonic acid dimethyl ester (RN 54731-78-1) and 2-(methacryloyloxy)ethylphosphonic acid dimethyl ester (RN 22432-83-3), 2-(methacryloyloxy)methylphosphonic acid diethyl ester (RN 60161-88-8), 2-(methacryloyloxy)-methylphosphonic acid dimethyl ester (RN 63411-25-6), 2-(methacryloyloxy)propylphosphonic acid dimethyl ester (RN 252210-28-9), 2-(acryloyloxy)methylphosphonic acid diisopropyl ester (RN 51238-98-3) or 2-(acryloyloxy)ethylphosphonic acid diethyl ester (RN 20903-86-0), and their phosphonic monoacid and diacid alternative forms, such as 2-(methacryloyloxy)ethylphosphonic acid (RN 80730-17-2), 2-(methacryloyloxy)-methylphosphonic acid (RN 87243-97-8), 2-(methacryloyloxy)propylphosphonic acid (RN 252210-30-3), 2-(acryloyloxy)propylphosphonic acid (RN 254103-47-4) and 2-(acryloyloxy)ethylphosphonic acid,
- vinylphosphonic acid, optionally substituted by cyano, phenyl, ester or acetate groups, vinylidenephosphonic acid, in the sodium salt form or the form of its isopropyl ester, or bis(2-chloroethyl)vinylphosphonate;
and their phosphate analogs, and
- acrylates or methacrylates of polyethylene glycol omega phosphates or acrylates or methacrylates of polypropylene glycol omega phosphates.

11. The use as claimed in one of claims 1 to 10, **characterized in that** the block copolymer employed is obtained as the result of a controlled radical polymerization process preferably using, as control agent, one or more compounds chosen from dithioesters, thioethers-thiones, dithiocarbamates and xanthates, said polymerization being carried out in particular under bulk conditions, in a solvent or in an aqueous emulsion, so as to directly obtain the copolymer in the form of an aqueous or aqueous/alcoholic solution.

12. The use as claimed in claim 11,
**characterized in that** the concentration of block copolymer in the film-forming composition is between 0.001 and 20% by mass with respect to the total mass of the solids content of the film-forming composition.

13. The use as claimed in claim 12, **characterized in that** the concentration of block copolymer in the film-forming composition is between 0.005 and 10% by mass with respect to the total mass of the solids content of the film-forming composition.

14. The use as claimed in claim 13, **characterized in that** the concentration of block copolymer in the film-forming composition is between 0.01 and 5% by mass with respect to the total mass of the solids content of the film-forming composition.

## Patentansprüche

1. Verwendung eines Blockcopolymers, bei dem mindestens ein Block Phosphatreste und/oder Phosphonatreste umfasst, wobei dieses Copolymer gegebenenfalls in einem Lösemittel, wie etwa einem organischen Lösemittel, Wasser oder einem Wasser-Alkohol-Gemisch, gelöst vorliegt, als Additiv in einer filmbildenden Zusammensetzung, um die Adhäsion dieser Zusammensetzung auf einer metallischen Oberfläche sicherzustellen oder zu begünstigen.

2. Verwendung eines Blockcopolymers, bei dem mindestens ein Block Phosphatreste und/oder Phosphonatreste umfasst, wobei dieses Copolymer gegebenenfalls in einem Lösemittel, wie etwa einem organischen Lösemittel, Wasser oder einem Wasser-Alkohol-Gemisch, gelöst vorliegt, als Additiv in einer filmbildenden Zusammensetzung, um eine metallische Oberfläche, auf der die filmbildende Zusammensetzung derart aufgetragen ist, dass eine Beschichtung erhalten wird, vor Korrosion zu schützen.

3. Verwendung gemäß Anspruch 1 oder 2, **dadurch gekennzeichnet, dass** die metallische Oberfläche eine Oberfläche auf der Basis eines Elements des Periodensystems der Elemente ist, das ausgewählt ist aus der Gruppe der Alkali- oder Erdalkalimetalle, der Übergangsmetalle, Aluminium, Gallium, Indium, Thallium, Silizium, Germanium, Zinn, Blei, Arsen, Antimon, Bismut, Tellur, Polonium oder Astat, sowie deren Oxiden oder deren Legierungen.

4. Verwendung gemäß einem der Ansprüche 1 bis 3, **dadurch gekennzeichnet, dass** die metallische Oberfläche eine Oberfläche auf der Basis von Aluminium, Duraluminium, Zink, Zinn, Kupfer, Legierungen des Kupfers wie Bronze oder Messing, Eisen, Stahl, der gegebenenfalls Edelstahl oder galvanisiert ist, Silber oder Vermeil (vergoldetem Silber) ist.

5. Verwendung gemäß einem der Ansprüche 1 bis 4, **dadurch gekennzeichnet, dass** der Block, der Phosphatreste und/oder Phosphonatreste umfasst, ein Homopolymer auf der Basis von Monomeren ist, die Phosphat- oder Phosphonatreste umfassen.

6. Verwendung gemäß einem der Ansprüche 1 bis 4, **dadurch gekennzeichnet, dass** der Block, der Phosphat- und/oder Phosphonatreste umfasst, ein statistisches Polymer auf der Basis von mindestens einem Monomer ist, das entweder diese Phosphat- oder Phosphonatreste oder Mischungen von diesen umfasst, wobei die Menge dieser Monomere zwischen 0,1 und 100 Gew.-% im Verhältnis zum Gesamtgewicht des Blocks liegt.

7. Verwendung gemäß Anspruch 6, **dadurch gekennzeichnet, dass** die Menge dieser Monomere zwischen 0,5 Gew.-% und 50 Gew.-% im Verhältnis zum Gesamtgewicht des Blocks liegt.

8. Verwendung gemäß einem der Ansprüche 6 oder 7, **dadurch gekennzeichnet, dass** die Menge dieser Monomere zwischen 2 Gew.-% und 20 Gew.-% im Verhältnis zum Gesamtgewicht des Blocks liegt.

9. Verwendung gemäß einem der Ansprüche 5 bis 8, **dadurch gekennzeichnet, dass** der Massenanteil des Ankerblocks im Verhältnis zum Gesamtgewicht des Blockcopolymers der vorliegenden Erfindung zwischen 90: 10 und 10:90 variiert.

10. Verwendung gemäß einem der Ansprüche 5 bis 9, **dadurch gekennzeichnet, dass** das Monomer, das Phosphat- oder Phosphonatgruppen umfasst, ausgewählt ist aus:
- Derivaten von N-Methylacrylamidomethylphosphonsäureestern, insbesondere dem n-Propylester (RN 31857-11-1), Methylester (RN 31857-12-2), Ethylester (RN 31857-13-3), n-Butylester (RN 31857-14-4), Isopropylester (RN 51239-00-0), wie auch deren Mono- und Diphosphonsäure-Derivaten, wie etwa N-Methacrylamidomethyldiphosphonsäure (RN 109421-20-7),
- Derivaten von N-Methacrylamidoethylphosphonsäureestern, wie etwa N-Methacrylamidoethylphosphonsäure-dimethylester (RN 266356-40-5), N-Methacrylamidoethylphosphonsäure-di(2-butyl-3,3-dimethyl)-ester (RN 266356-45-0), wie auch deren Mono- und Diphosphonsäure-Derivaten, wie etwa N-Methacrylamidoethyldiphosphonsäure (RN 80730-17-2),
- Derivaten von N-Acrylamidomethylphosphonsäureestern, wie etwa N-Acrylamidomethylphosphonsäure-dimethylestern (RN 24610-95-5), N-Acrylamidomethylphosphonsäure-diethylester (RN 24610-96-6), Bis(2-chlorpropyl)-N-acrylamidomethylphosphonat (RN 50283-36-8), wie auch deren Mono- und Diphosphonsäure-Derivaten, wie etwa N-Acrylamidomethylphosphonsäure (RN 151752-38-4),
- Derivaten von Vinylbenzylphosphonat-dialkylester, insbesondere den Di(n-propyl)- (RN 60181-26-2), Di(isopropyl)- (RN 159358-34-6), Diethyl- (RN 726-61-4), Dimethyl- (RN266356-24-5), Di(2-butyl-3,3-dimethyl)- (RN 266356-29-0) und Di(t-butyl)-ester-Derivaten (RN 159358-33-5), wie auch deren Mono- und Diphosphonsäure-Varianten, wie etwa Vinylbenzyldiphosphonsäure (RN 53459-43-1),
- Diethyl-2-(4-vinylphenyl)ethanphosphonat (RN 61737-88-0),
- Derivaten von Dialkylphosphonoalkyl-acrylaten und -methacrylaten, wie etwa 2-(Acryloyloxy)-ethylphosphonsäure-dimethylester (RN 54731-78-1) und 2-(Methacryloyloxy)-ethylphosphonsäure-dimethylester (RN 22432-83-3), 2-(Methacryloyloxy)-methylphosphonsäure-diethylester (RN 60161-88-8), 2-(Methacryloyloxy)-methylphosphonsäure-dimethylester (RN 63411-25-6), 2-(Methacryloyloxy)-propylphosphonsäuredimethylester (RN 252210-28-9), 2-(Acryloyloxy)-methylphosphonsäure-diisopropylester (RN 51238-98-3), 2-(Acryloyloxy)-ethylphosphonsäure-diethylester (RN 20903-86-0), wie auch deren Mono- und Diphosphonsäure-Varianten, wie etwa 2-(Methacryloyloxy)-ethylphosphonsäure (RN 80730-17-2), 2-(Methacryloyloxy)-methylphosphonsäure (RN 87243-97-8), 2-(Methacryloyloxy)-propylphosphonsäure (RN 252210-30-3), 2-(Acryloyloxy)-propylphosphonsäure (RN 254103-47-4) und 2-(Acryloyloxy)-ethylphosphonsäure,
- Vinylphosphonsäure, gegebenenfalls substituiert mit Cyano-, Vinyl-, Ester- oder Acetatgruppen, Vinylidenphosphonsäure, in Form eines Natriumsalzes oder deren Isopropylester, Bis(2-chlorethyl)-vinylphosphonat;
wie auch deren Phosphat-Analoga, und
- Acrylate oder Methacrylate von omega-phosphoryliertem Polyethylenglykol oder Acrylaten oder Methacrylaten von omega-phosphoryliertem Polypropylenglykol.

11. Verwendung gemäß einem der Ansprüche 1 bis 10, **dadurch gekennzeichnet, dass** das eingesetzte Blockcopolymer erhalten wurde aus dem Produkt eines kontrollierten radikalischen Polymerisationsverfahrens, vorzugsweise unter Verwendung von einer oder mehreren Verbindungen, die ausgewählt sind aus Dithioestern, Thioetherthionen, Dithiocarbamaten und Xanthogenaten als Kontrollmittel, wobei diese Polymerisation insbesondere in der Masse, in einem Lösemittel oder in wässriger Emulsion derart durchgeführt wird, dass das Copolymer direkt in Form einer wässrigen oder wässrig-alkoholischen Lösung erhalten wird.

12. Verwendung gemäß Anspruch 11, **dadurch gekennzeichnet, dass** die Konzentration des Blockcopolymers in der filmbildenden Zusammensetzung zwischen 0,001 und 20 Massen-% im Verhältnis zur Gesamtmasse der Trockenmasse der filmbildenden Zusammensetzung liegt.

13. Verwendung gemäß Anspruch 12, **dadurch gekennzeichnet, dass** die Konzentration des Blockcopolymers in der filmbildenden Zusammensetzung zwischen 0,005 und 10 Massen-% im Verhältnis zur Gesamtmasse der Trockenmasse der filmbildenden Zusammensetzung liegt.

14. Verwendung gemäß Anspruch 13, **dadurch gekennzeichnet, dass** die Konzentration des Blockcopolymers in der filmbildenden Zusammensetzung zwischen 0,01 und 5 Massen-% im Verhältnis zur Gesamtmasse der Trockenmasse der filmbildenden Zusammensetzung liegt.
